# EUROPEAN PATENT APPLICATION

(11) **EP 3 101 906 A1**
(43) Date of publication of application: **07.12.2016**
(21) Application number: 14881142.5
(22) Date of filing: 05.12.2014
(51) Int. Cl.: H04Q 9/00, G06F 13/00, H04M 11/00

(54) **COMMUNICATION SYSTEM, COMMON SERVICE CONTROL APPARATUS, DATA COLLECTION METHOD, AND NON-TRANSITORY COMPUTER READABLE MEDIUM**

(30) Priority: 29.01.2014 JP 2014014547
(71) Applicant: NEC Corporation, Tokyo 108-8001 (JP)
(72) Inventor: INOUE, Tetsuo, Tokyo 108-8001 (JP); YAMADA, Toru, Tokyo 108-8001 (JP)
(74) Representative: Betten & Resch
(86) International application number: PCT/JP2014/006077
(87) International publication number: WO 2015/114713

(57) **Abstract**

It is possible to provide a communication system capable of using data generated by a device to be used regardless of a common service platform to which the device to be used is connected. The communication system according to the present invention includes: a common service control apparatus (30) that collects data generated in a device apparatus (10); a common service control apparatus (130) that collects data generated in a device apparatus (110); and an application server (50) that provides a service using the data collected in the common service control apparatus (30). The common service control apparatus (30) determines, upon receiving a message from the application server (50), whether the common service control apparatus (30) is connected to the target device apparatus specified in the message, and when the common service control apparatus (30) is not connected to the target device apparatus, the common service control apparatus (30) collects the data from the target device apparatus (110) via the common service control apparatus (130).

## Description

### Technical Field

The present invention relates to a communication system, a common service control apparatus, a data collection method, and a program, and relates to, for example, a communication system, a common service control apparatus, a data collection method, and a program that collect data in response to a request from an application server.

### Background Art

Automatic data collection and control can be made possible by a device connected to a network autonomously transmitting detected data to a server apparatus and the like. Such a service is referred to as Machine-to-Machine (M2M), and an application of M2M has been attracting attention recently.

The server apparatus and the like can collect electricity usage data in real time via a network by, for example, connecting an electricity meter in each household and building to a network. Business operators collecting the electricity usage data use the data that are collected in the manner described above to provide services and the like for attempting optimization of power production.

As the M2M service has become widely used, it is necessary to consider a case in which a plurality of services or applications use data that has been detected by the same device. In order to efficiently realize such a case, installation of a common service platform that integrates functions common to the plurality of services and applications to promote entry of new services has been investigated.

Consider a case in which a plurality of services or applications use data detected by the same device via the common service platform. In this case, a unique identifier (an address (URI) or a device ID) is added to each device and each of the plurality of services or applications specifies the identifier to access the device.

In this case, each of the services or applications needs to recognize the identifier assigned to each device to use the device. However, an application or the like that newly starts a service may not be able to know the identifier of the device that has already been installed and operated.

Patent Literature 1 discloses a method for solving this problem. Patent Literature 1 discloses a configuration of a communication system which allows a common service platform to discover the device using information on the place where the device is located or information on data detection time.

### Citation List

### Patent Literature

[Patent Literature 1] Published Japanese Translation of PCT International Publication for Patent Application, No. 2013-521709

### Summary of Invention

### Technical Problem

However, the communication system disclosed in Patent Literature 1 is based on a situation in which the device to be used is connected to a common service platform the same as that to which the application that uses the device is connected. Therefore, when the device to be used and the application are connected to common service platforms different from each other, it is impossible to discover the device to be used.

An object of the present invention is to solve the aforementioned problem and to provide a communication system, a common service control apparatus, a data collection method, and a program capable of using data generated by the device to be used regardless of the common service platform to which the device to be used is connected.

### Solution to Problem

A communication system according to a first exemplary aspect of the present invention includes: a first common service control apparatus that collects data generated in a device apparatus that is connected via a network; a second common service control apparatus that collects data generated in a device apparatus different from the device apparatus; and an application server that provides a service using the data collected in the first common service control apparatus, in which the application server transmits a message for requesting a collection of the data to the first common service control apparatus, and the first common service control apparatus determines, upon receiving the message from the application server, whether the first common service control apparatus is connected to the target device apparatus specified in the message via the network, and when the first common service control apparatus is not connected to the target device apparatus, the first common service control apparatus collects the data from the target device apparatus connected to the second common service control apparatus via the network via the second common service control apparatus.

A common service control apparatus according to a second exemplary aspect of the present invention includes: a reception unit that receives a message for requesting a collection of data transmitted from an application server; a determination unit that determines whether the common service control apparatus is connected to a target device apparatus specified in the message via a network; and collecting, when the common service control apparatus is not connected to the target device apparatus, the data from the target device apparatus connected to another common control apparatus via the network.

A data collection method according to a third exemplary aspect of the present invention includes: receiving a message for requesting a collection of data transmitted from an application server; determining whether a common control apparatus is connected to a target device apparatus specified in the message via a network; and collecting, when the common control apparatus is not connected to the target device apparatus, the data from the target device apparatus connected to another common control apparatus via the network.

A program according to a fourth exemplary aspect of the present invention causes a computer to execute the following processing of: receiving a message for requesting a collection of data transmitted from an application server; determining whether a common control apparatus is connected to a target device apparatus specified in the message via a network; and collecting, when the common control apparatus is not connected to the target device apparatus, the data from the target device apparatus connected to another common control apparatus via the network.

### Advantageous Effects of Invention

According to the present invention, it is possible to provide a communication system, a common service control apparatus, a data collection method, and a program capable of using data generated by the device to be used regardless of a common service platform to which the device to be used is connected.

### Brief Description of Drawings

Fig. 1 is a configuration diagram of a communication system according to a first exemplary embodiment;
Fig. 2 is a configuration diagram of a common service control apparatus according to a second exemplary embodiment;
Fig. 3 is a diagram for describing items accumulated in a device database according to the second exemplary embodiment;
Fig. 4A is a diagram for describing a flow of processing when data is collected in the common service control apparatus according to the second exemplary embodiment;
Fig. 4B is a diagram for describing a flow of processing when data is collected in the common service control apparatus according to the second exemplary embodiment;
Fig. 5 is a diagram for describing a flow of processing when data is collected in another common service control apparatus according to the second exemplary embodiment;
Fig. 6 is a configuration diagram of a common service control apparatus according to a third exemplary embodiment; and
Fig. 7 is a configuration diagram of a common service control apparatus according to a fourth exemplary embodiment.

### Description of Embodiments

### (First Exemplary Embodiment)

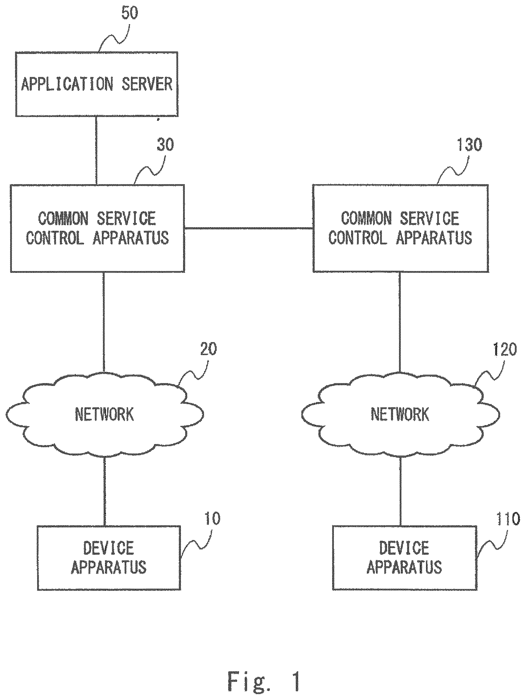

Hereinafter, with reference to the drawings, exemplary embodiments of the present invention will be described. First, with reference to Fig. 1, a configuration example of a communication system according to a first exemplary embodiment of the present invention will be described. The communication system shown in Fig. 1 includes a device apparatus 10, a device apparatus 110, a common service control apparatus 30, a common service control apparatus 130, and an application server 50. In Fig. 1, the configuration in which only one application server 50 is included is shown. Alternatively, a plurality of application servers may be included.

The device apparatus 10 and the common service control apparatus 30 are connected to each other via a network 20. The device apparatus 110 and the common service control apparatus 130 are connected to each other via a network 120. The application server 50 is connected to the common service control apparatus 30. The device apparatus 10 or the device apparatus 110 may be connected to the common service control apparatus 30 or the common service control apparatus 130 via a network constructed based on, for example, a communication standard defined by the 3rd Generation Partnership Project (3GPP). Further, the common service control apparatus 30 is connected to the common service control apparatus 130. The common service control apparatus 30 may be connected to the common service control apparatus 130 via a network or the like.

The common service control apparatus 30 collects data generated by the device apparatus 10. The common service control apparatus 30 may be a platform that operates software or a plurality of functions mounted on the common service control apparatus 30 and may be referred to as a common service platform. The common service control apparatus 30 may be a computer apparatus such as a server apparatus or the like.

The device apparatus 10 may be a sensor apparatus or an M2M terminal apparatus used in the M2M service. The sensor apparatus may be, for example, an apparatus that detects changes in an external environment such as a temperature, humidity and the like. The M2M terminal apparatus may be, for example, a communication apparatus that autonomously transmits data without requiring user operations such as a communication apparatus that autonomously transmits sales of an automatic vending machine to the server apparatus.

The application server 50 is connected to the common service control apparatus 30. The application server 50 provides application services using the data that the common service control apparatus 30 has collected from the device apparatus. Further, the application server 50 transmits a message for requesting the collection of the data to the common service control apparatus 30.

Upon receiving the message for requesting the collection of the data from the application server 50, the common service control apparatus 30 determines whether it is connected to the device apparatus specified by the message (hereinafter it will be referred to as a target device apparatus) via the network 20. When it is determined that the common service control apparatus 30 is not connected to the target device apparatus via the network 20, the common service control apparatus 30 collects data from the target device apparatus connected to the common service control apparatus 130 via the network 120. The common service control apparatus 30 collects data from the target device apparatus via the common service control apparatus 130.

As described above, by using the communication system shown in Fig. 1, the application server 50 is able to collect data not only from the device apparatus 10 connected to the common service control apparatus 30 via the network 20 but also from the device apparatus 110 connected to the common service control apparatus 130 via the network 120.

In the communication system shown in Fig. 1, the common service control apparatus 30 is connected to the common service control apparatus 130. Therefore, even when the application server 50 does not recognize the common service control apparatus to which the target device apparatus is connected, the application server 50 is able to collect data from the target device apparatus that is connected to the common service control apparatus 30 or the common service control apparatus 130 by transmitting the message for requesting the collection of the data to the common service control apparatus 30.

### (Second Exemplary Embodiment)

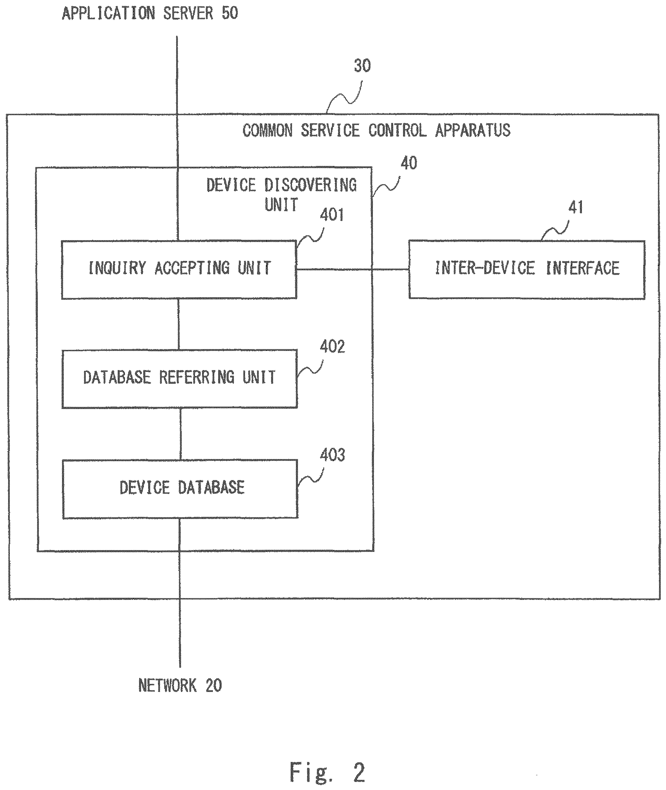

Next, with reference to Fig. 2, a configuration example of a common service control apparatus 30 according to a second exemplary embodiment of the present invention will be described. The common service control apparatus 30 includes a device discovering unit 40 and an inter-device interface 41. Since the common service control apparatus 130 has a configuration similar to that of the common service control apparatus 30, a detailed description regarding the common service control apparatus 130 will be omitted.

Upon receiving the message for requesting the collection of the data (hereinafter it will be referred to as a data collection request message) from the application server 50, the device discovering unit 40 specifies the target device apparatus that generates data specified by the data collection request message. In the following description, processing for specifying the target device apparatus will be described.

The device discovering unit 40 includes an inquiry accepting unit 401, a database referring unit 402, and a device database 403. The inquiry accepting unit 401 receives the data collection request message transmitted from the application server 50. The inquiry accepting unit 401 is used as means for receiving the data collection request message.

The device database 403 is a database in which information such as the identifier of the device, the type of the device, the address of the device, the latitude in which it is located, the longitude in which it is located, and the latest data updating time is accumulated for each device. A Media Access Control (MAC) address may be used, for example, as the identifier of the device or another identifier which can uniquely identify the device apparatus in the communication system may be used. The MAC address is an address that is allocated to the device in advance in order to uniquely identify the device. The type of the device indicates, for example, information indicating which kind of data the device can detect. The address of the device, the latitude in which it is located, and the longitude in which it is located are information items indicating the location where the device apparatus is located. The latest data updating time indicates, for example, a time that the device apparatus has last detected data.

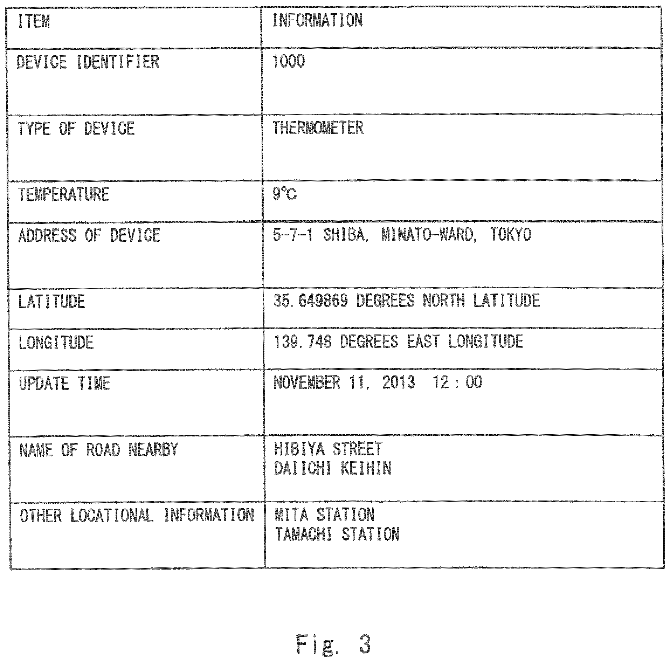

Fig. 3 indicates information for each device accumulated in the device database 403. While the information on each device is composed of information as shown in Fig. 3, the items of the information are not limited to them and other items may be included or some of the items shown in Fig. 3 may not be included. For example, besides the information shown in Fig. 3, the device database 403 may include information indicating the management entity of the device. The management entity of the device is, for example, the owner of the device and indicates the entity that controls the device. The owner of the device may be, for example, the owner of an agricultural management temperature sensor. Further, the item of the information managed by the device database 403 may be specified in the data collection request message. The application server 50 may set, for example, an address as the location in which the device is located or may set the type of the device in the data collection request message. That is, when the location in which the device is located is set in the data collection request message, the application server 50 requests for collection of data from the device apparatus that detects data in the location that has been set, and when the type of the device is set in the data collection request message, the application server 50 requests for collection of data from the device apparatus of the type of the device that has been set.

Referring back to Fig. 2, the database referring unit 402 determines whether the target device apparatus specified by the data collection request message is connected via the network 20. The database referring unit 402 is used as means for determining whether the target device apparatus specified by the data collection request message is connected via the network 20. The database referring unit 402 determines, for example, whether there is a device apparatus that is located in the place specified in the data collection request message. The database referring unit 402 searches the device database 403 and determines whether there is a target device apparatus specified by the data collection request message. The database referring unit 402 outputs information regarding the result of searching the device database 403 to the inquiry accepting unit 401.

Upon receiving a notification indicating that the target device apparatus has been detected from the database referring unit 402, the inquiry accepting unit 401 collects data detected in the target device apparatus from the target device apparatus via the network 20. Further, the inquiry accepting unit 401 transmits data that has been collected to the application server 50.

Upon receiving a notification indicating that the target device apparatus has not been detected from the database referring unit 402, the inquiry accepting unit 401 makes an inquiry regarding whether the target device apparatus is connected to the common service control apparatus 130 via the inter-device interface 41.

When the target device apparatus that has been specified in the data collection request message transmitted from the application server 50 is not connected to the common service control apparatus 30, the inter-device interface 41 sends an inquiry similar to the above one to another common service control apparatus. The inter-device interface 41 is used as means for performing communication with the other common service control apparatus. The inter-device interface 41 transmits, for example, the data collection request message to the common service control apparatus 130 that is connected via the inter-device interface 41. The common service control apparatus 130 determines whether the target device apparatus specified by the data collection request message is connected via the network 120.

When it is determined that the common service control apparatus 130 is connected to the target device apparatus, the common service control apparatus 130 transmits the data that has been collected from the target device apparatus to the common service control apparatus 30 via the inter-device interface provided in the common service control apparatus 130. When it is determined that the common service control apparatus 130 is not connected to the target device apparatus, the common service control apparatus 130 transmits a message notifying that the common service control apparatus 130 is not connected to the target device apparatus to the common service control apparatus 30 via the inter-device interface provided in the common service control apparatus 130.

As described above, the common service control apparatus 30 shown in Fig. 2 is able to discover the device apparatus 10 connected to the common service control apparatus 30 in the device discovering unit 40. Further, the common service control apparatus 30 may provide information necessary for the application server 50 to use the device apparatus 10 for the application server 50. That is, the device discovering unit 40 may acquire the information on the identifier of the corresponding device from the information on the device such as the place and the time and transmit the identifier to the application server 50. That is, as described above, the inquiry accepting unit 401 may collect data from the device apparatus 10 or the application server 50 that has recognized the identifier of the device apparatus 10 may collect data from the device apparatus 10 via the network 20.

Further, while the configuration in which only one device apparatus 10 is connected to the network 20 has been described in Fig. 2, a plurality of device apparatuses 10 may be connected to the network 20. In this case, there may be a plurality of corresponding devices that respond to the inquiry from the application server 50. In this case, use conditions such as information such as the usage charge for each device or the accuracy of the data that has been detected may be sent to the application server 50 and the application server 50 may select the device that the user would prefer based on the obtained information.

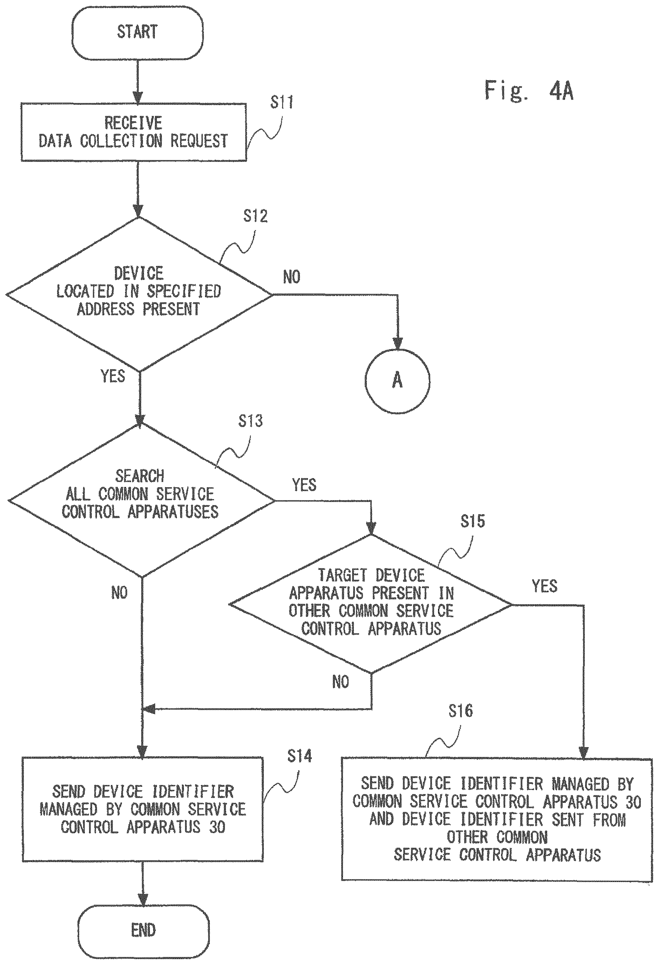

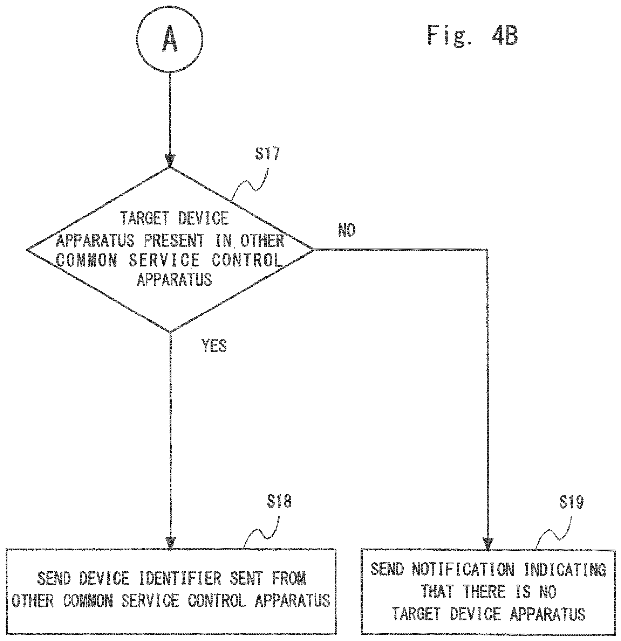

Next, with reference to Figs. 4A and 4B, a flow of processing in the common service control apparatus 30 according to the second exemplary embodiment of the present invention will be described. In Figs. 4A and 4B, an example in which information on the address in which the device is located is used to make an inquiry about the device that the application server 50 would like to use will be described.

First, the inquiry accepting unit 401 receives the data collection request message transmitted from the application server 50 (S11). The application server 50 transmits the data collection request message in which the information on the address in which the device is located is set to the common service control apparatus 30.

Next, the database referring unit 402 determines whether the device is located or is present in the address set in the data collection request message (S12). The database referring unit 402 searches the device database 403 for the presence of the device that is associated with the address set in the data collection request message. The database referring unit 402 may determine whether the device is located or is present in the address set in the data collection request message according to the search result.

When it is determined by the database referring unit 402 that there is a device that is associated with the address set in the data collection request message in the device database 403, the inquiry accepting unit 401 determines whether to search for another common service control apparatus (S13). The application server 50 may set whether to search for the other common service control apparatus in the data collection request message. In this case, the inquiry accepting unit 401 determines whether to search for the other common service control apparatus in accordance with the setting of the data collection request message. When it is determined that the other common service control apparatus will not be searched for, that is, when the inquiry accepting unit 401 determines that it is sufficient that at least one target device is detected, the inquiry accepting unit 401 notifies the application server 50 of the identifier of the corresponding device (S14). In Step S14, the inquiry accepting unit 401 notifies the application server 50 of the device identifier managed by the common service control apparatus 30. The inquiry accepting unit 401 may notify the application server 50 of use conditions of the device as well. The use conditions may be information such as, for example, the fee for collecting the data from the corresponding device or time during which the data can be collected.

When the inquiry accepting unit 401 determines that the other common service control apparatus should be searched for in Step S13, the inquiry accepting unit 401 transmits the data collection request message to the common service control apparatus 130 via the inter-device interface 41. That is, the inquiry accepting unit 401 determines whether the device that is associated with the address set in the data collection request message is connected to the common service control apparatus 130 (S15). When a plurality of common service control apparatuses are connected to the inter-device interface 41, the inquiry accepting unit 401 may transmit the data collection request message to all the common service control apparatuses that are connected to the inter-device interface 41.

When the inquiry accepting unit 401 does not receive a notification indicating the identifier of the corresponding device as the message in response to the data collection request message from the common service control apparatus 130, the inquiry accepting unit 401 executes processing of Step S14. Upon receiving a notification indicating the identifier of the corresponding device as the message in response to the data collection request message from the common service control apparatus 130, the inquiry accepting unit 401 notifies the application server 50 of the device identifier managed by the common service control apparatus 30 and the device identifier sent from the other common service control apparatus (S16). When it is determined by the database referring unit 402 that there is no device that is associated with the address set in the data collection request message in the device database 403 in Step S12, the inquiry accepting unit 401 transmits the data collection request message to the common service control apparatus 130 via the inter-device interface 41. That is, the inquiry accepting unit 401 determines whether the device that is associated with the address set in the data collection request message is connected to the common service control apparatus 130 (S17). When a plurality of common service control apparatuses are connected to the inter-device interface 41, the inquiry accepting unit 401 may transmit the data collection request message to all the common service control apparatuses that are connected to the inter-device interface 41. Upon receiving a notification indicating the identifier of the corresponding device as the message in response to the data collection request message from the common service control apparatus 130, the inquiry accepting unit 401 notifies the application server 50 of the device identifier sent from the other common service control apparatus (S18). When the inquiry accepting unit 401 does not receive a notification indicating the identifier of the corresponding device as the message in response to the data collection request message from the common service control apparatus 130 or when it receives a message indicating that there is no corresponding device, the inquiry accepting unit 401 transmits a message for notifying that there is no target device apparatus to the application server 50 (S19).

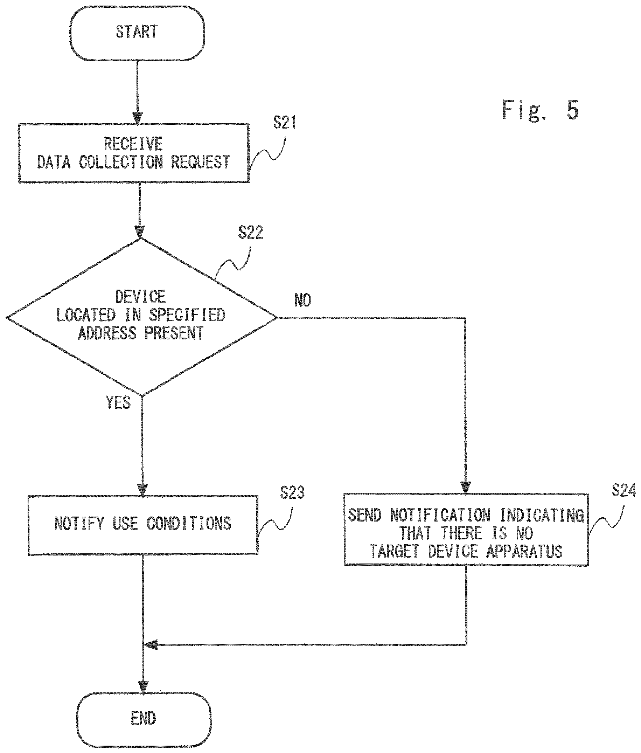

Next, with reference to Fig. 5, a flow of processing in the common service control apparatus 130 according to a second exemplary embodiment of the present invention will be described. First, the common service control apparatus 130 receives the data collection request message transmitted via the inter-device interface 41 of the common service control apparatus 30 (S21).

Next, the common service control apparatus 130 determines whether there is a device that is located in the address set in the data collection request message in the device database of the common service control apparatus 130 (S22). When it is determined that the corresponding device is present in the device database of the common service control apparatus 130, the common service control apparatus 130 notifies the common service control apparatus 30 of the use conditions when the corresponding device is used together with the identifier of the corresponding device (S23). The use conditions may be information such as, for example, the fee for collecting the data from the corresponding device, a time during which the data can be collected, and conditions or the like of the application server that can preferentially use the corresponding device.

When the common service control apparatus 130 determines that there is no corresponding device in the device database of the common service control apparatus 130, the common service control apparatus 130 transmits a message for notifying that there is no target device apparatus to the common service control apparatus 30 (S24).

As described above, even when the application server 50 does not recognize the device identifier of the target device apparatus, the application server 50 is able to acquire the device identifier of the target device apparatus by transmitting the data collection request message in which the address information of the target device apparatus is set. Further, an interface that performs data communication is provided between the common service control apparatus 30 and the common service control apparatus 130. Therefore, the application server 50 is also able to acquire information regarding the target device apparatus connected to the common service control apparatus 130 by transmitting the data collection request message to the common service control apparatus 30.

The application server 50 acquires the identifier of the target device apparatus, whereby the application server 50 is able to specify the target device apparatus and to collect data from the target device apparatus. Alternatively, when the common service control apparatus 30 or the common service control apparatus 130 has successfully specified the target device apparatus based on the conditions specified by the data collection request message, the common service control apparatus 30 or the common service control apparatus 130 may collect data from the target device apparatus. Further, the common service control apparatus 30 may transmit data that has been collected to the application server 50. Alternatively, the common service control apparatus 130 may transmit the data that has been collected to the application server 50 via the common service control apparatus 30.

Further, the application server 50 is normally connected to the common service control apparatus 30. Therefore, the target device apparatus is used in accordance with the use policy of a communication provider or the like that manages the common service control apparatus 30. Therefore, when the application server 50 uses the target device apparatus connected to the common service control apparatus 130, it notifies the application server 50 of the use policy (use conditions) of the communication provider that manages the common service control apparatus 130. The application server 50 is therefore able to use the target device apparatus connected to the common service control apparatus 130 knowing the use policy when the common service control apparatus 130 is used.

While the flow of the processing when the address in which the device is located is used has been described in Figs. 4 and 5, the common service control apparatus 30 may search for the target device apparatus using information other than the address in which the device is located.

The application server 50 may make an inquiry to the common service control apparatus 30, for example, about the presence of the device based on the information on the latitude and the longitude in which the device is located. The application server 50 may make an inquiry to the common service control apparatus 30 about the presence of the device using, for example, the information on the position in which the device is located as a relative location from a predetermined position. The application server 50 may make an inquiry to the common service control apparatus 30 about the target device apparatus by specifying, for example, the device apparatus that is present within a five-meter radius of a predetermined position.

In this case, in the device discovering unit 40, the relative location is converted into the absolute location (e.g., the latitude and the longitude) and then the device is searched for. The result of the search for the device may indicate that a plurality of devices are present in this location. In this case, information such as the usage charge for each device or the accuracy of the data that has been detected may be sent to the application server 50 and the user of the application server 50 may select a preferable device.

### (Third Exemplary Embodiment)

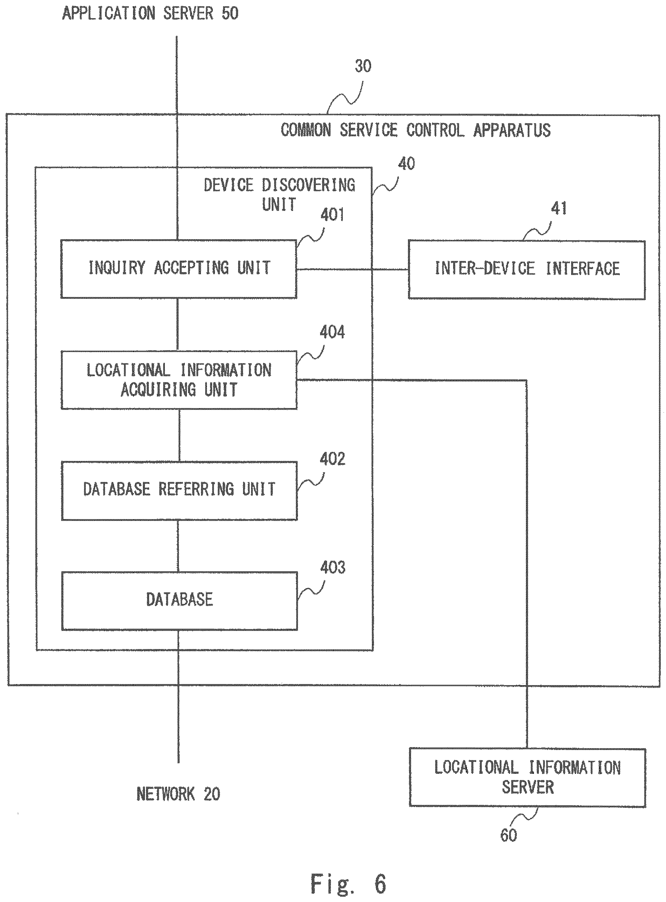

Next, with reference to Fig. 6, a configuration example of a common service control apparatus 30 according to a third exemplary embodiment of the present invention will be described. The common service control apparatus 30 includes a device discovering unit 40 and an inter-device interface 41. The device discovering unit 40 includes an inquiry accepting unit 401, a database referring unit 402, a device database 403, and a locational information acquiring unit 404.

When the device corresponding to the contents of inquiry (target device apparatus) is not connected to the common service control apparatus 30, the inter-device interface 41 sends an inquiry similar to the above one to another common service control apparatus.

In the third exemplary embodiment, a configuration example of the common service control apparatus 30 when the target device apparatus is discovered using the locational information will be described. The inquiry accepting unit 401 receives the data collection request message in which the locational information regarding the target device apparatus is set from the application server 50. The inquiry accepting unit 401 acquires absolute locational information indicated by the locational information set in the data collection request message from a locational information server 60 provided outside of the common service control apparatus 30 via the locational information acquiring unit 404. The database referring unit 402 refers to the device database 403 using the absolute locational information that has been acquired to search for the device located in the corresponding position. While the latitude and the longitude are mentioned as examples of the absolute location, other indices may be included. Further, the locational information server 60 may be operated by a provider different from the provider that operates the common service control apparatus 30.

As described above, by using the common service control apparatus 30 shown in Fig. 6, the common service control apparatus 30 is able to acquire the absolute locational information of the target device apparatus using the locational information server 60 located outside of the common service control apparatus 30. Accordingly, even when the user of the application server 50 does not specify the absolute locational information of the target device apparatus, the common service control apparatus 30 is able to acquire the absolute locational information managed in the locational information server 60 using the locational information specified by the application server 50. Therefore, the common service control apparatus 30 converts ambiguous locational information specified by the application server 50 into absolute locational information managed in the locational information server 60, whereby the common service control apparatus 30 is able to execute processing using accurate locational information. The ambiguous locational information may be, for example, information that specifies a region in a predetermined range (e.g., a region in an A-meter radius).

### (Fourth Exemplary Embodiment)

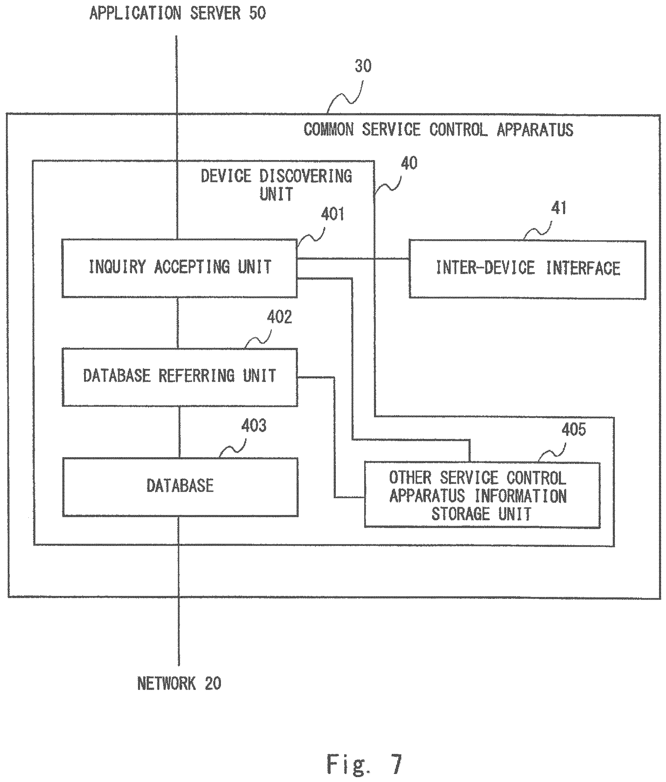

Next, with reference to Fig. 7, a configuration example of the common service control apparatus 30 according to a fourth exemplary embodiment will be described. The common service control apparatus 30 includes a device discovering unit 40 and an inter-device interface 41. The device discovering unit 40 includes an inquiry accepting unit 401, a database referring unit 402, a device database 403, and another service control apparatus information storage unit 405.

When the device corresponding to the contents of inquiry is not connected to the common service control apparatus 30, the inter-device interface 41 sends an inquiry similar to the above one to another common service control apparatus. When the inter-device interface 41 acquires information regarding the target device apparatus from the common service control apparatus 130, for example, the inquiry accepting unit 401 or the database referring unit 402 stores information on the device connected to the common service control apparatus 130 in the other service control apparatus information storing unit 405. The information regarding the target device apparatus may be, for example, the identifier of the target device apparatus or may be data that has been collected from the target device apparatus.

By using the common service control apparatus 30 shown in Fig. 7, upon receiving an inquiry about the information regarding the target device apparatus that has already been searched for from an application server different from the application server 50, information on the device connected to the common service control apparatus 130 can be transmitted to the application server that has made the inquiry without performing communication with the other common service control apparatus 130 via the inter-device interface 41.

That is, by using the common service control apparatus 30 shown in Fig. 7, the amount of data communication between the common service control apparatus 30 and the common service control apparatus 130 can be reduced. Further, the common service control apparatus 30 notifies the application server of the data stored in the other service control apparatus information storage unit 405 of the common service control apparatus 30 without sending an inquiry to the common service control apparatus 130. Therefore, compared to the common service control apparatus 30 which does not include the other service control apparatus information storage unit 405, the time during which the application server 50 acquires information regarding the target apparatus becomes shorter in the common service control apparatus 30 shown in Fig. 7.

Although the present invention has been described as a configuration of hardware in the above exemplary embodiments, the present invention is not limited to it. The present invention can achieve processing in the common service control apparatus 30 or the common service control apparatus 130 by causing a Central Processing Unit (CPU) to execute a computer program.

In the above example, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Note that the present invention is not limited to the above embodiments and may be changed as appropriate without departing from the spirit of the present invention. The common service control apparatuses 30 and 130 are, for example, an M2M platform and may be an M2M Service Infrastructure defined in one M2M that performs standardization regarding Machine to Machine services. The M2M Service Infrastructure corresponds to an Infrastructure Node (IN) in oneM2M architecture and includes a Common Services Entity (CSE) that provides a common services function (CSF) group defined by one M2M. The common service control apparatuses 30 and 130 may be apparatuses including a plurality of CSEs. The CSE included in the IN is also called an Infrastructure Node (IN)-CSE. The network 30 is, for example, a mobile communication network provided by a communication provider and may be an Underlying Network defined in oneM2M. A gateway apparatus may be used as an apparatus that is provided between the common service control apparatus 30 or the common service control apparatus 130 and the device apparatus 10 or the device apparatus 110. The gateway apparatus is, for example, a mobile router, and may be an M2M Gateway defined in oneM2M. The M2M Gateway corresponds to a Middle Node (MN) in oneM2M architecture and includes a CSE. The CSE in the MN is also called an MN-CSE. Further, the device apparatuses 10 and 110 are, for example, a sensor device and may be an M2M Device defined in oneM2M. The M2M Device corresponds to an Application Service Node (ASN) or an Application Dedicated Node (ADN) in oneM2M architecture, and the ASN includes a CSE. The CSE in the ASN is also called an ASN-CSE. Further, the application server 50 is, for example a server that performs specific tasks and may be an M2M Application Infrastructure defined in oneM2M. Further, the application server 50 may include an Application Entity (AE) in oneM2M architecture. The AE which is in an Infrastructure Domain defined by oneM2M and is connected to the IN-CSE is also called an Infrastructure Node (IN)-AE.

### (Supplementary Note 1)

A communication system comprising a first common service control apparatus that collects data generated in a device apparatus that is connected via a network; a second common service control apparatus that collects data generated in a device apparatus different from the device apparatus; and an application server that provides a service using the data collected in the first common service control apparatus, in which the application server transmits a message for requesting a collection of the data to the first common service control apparatus, and the first common service control apparatus determines, upon receiving the message from the application server, whether the first common service control apparatus is connected to the target device apparatus specified in the message via the network, and when the first common service control apparatus is not connected to the target device apparatus, the first common service control apparatus collects the data from the target device apparatus connected to the second common service control apparatus via the network via the second common service control apparatus.

### (Supplementary Note 2)

The communication system according to Supplementary Note 1, wherein the application server sets target device association information used to specify the target device apparatus in the message.

### (Supplementary Note 3)

The communication system according to Supplementary Note 2, wherein the target device association information comprises at least one of locational information in which the target device apparatus is present, the type of data that the target device apparatus collects, and time at which the data collected by the target device apparatus has been updated.

### (Supplementary Note 4)

The communication system according to Supplementary Note 3, wherein the locational information is specified using at least one of an address, a latitude, a longitude, and a relative location based on a specific location.

### (Supplementary Note 5)

The communication system according to Supplementary Note 3 or 4, wherein the first and second common service control apparatuses determine whether the target device apparatus is connected via the network using absolute locational information converted in a locational information server installed outside of the common service control apparatus.

### (Supplementary Note 6)

The communication system according to any one of Supplementary Notes 1 to 5, wherein the second common service control apparatus notifies, when the second common service control apparatus is connected to the target device apparatus via the network, the application server of a use condition when the target device apparatus is used via the first common service control apparatus.

### (Supplementary Note 7)

The communication system according to any one of Supplementary Notes 1 to 6, wherein the first common service control apparatus collects, when the first common service control apparatus is not connected to the target device apparatus, the data from the target device apparatus connected to the second common service control apparatus via the network via the second common service control apparatus without sending a notification indicating that the first common service control apparatus is not connected to the target device apparatus to the application server.

### (Supplementary Note 8)

The communication system according to any one of Supplementary Notes 1 to 7, wherein the first common service control apparatus includes a storage unit that stores the data collected from the second common service control apparatus.

### (Supplementary Note 9)

The communication system according to any one of Supplementary Notes 1 to 8, wherein the first common service control apparatus notifies, when it detects a plurality of target device apparatuses, the application server of a use condition regarding the plurality of target device apparatuses.

### (Supplementary Note 10)

A common service control apparatus comprising a reception unit that receives a message for requesting a collection of data transmitted from an application server, and a determination unit that determines whether the common service control apparatus is connected to a target device apparatus specified in the message via a network, wherein, when the common service control apparatus is not connected to the target device apparatus, the data is collected from the target device apparatus connected to another common control apparatus via the network.

### (Supplementary Note 11)

A data collection method comprising receiving a message for requesting a collection of data transmitted from an application server; determining whether a common control apparatus is connected to a target device apparatus specified in the message via a network; and collecting, when the common control apparatus is not connected to the target device apparatus, the data from the target device apparatus connected to another common control apparatus via the network.

### (Supplementary Note 12)

A program that causes a computer to execute the following processing of: receiving a message for requesting a collection of data transmitted from an application server; determining whether a common control apparatus is connected to a target device apparatus specified in the message via a network; and collecting, when the common control apparatus is not connected to the target device apparatus, the data from the target device apparatus connected to another common control apparatus via the network.

Although the present invention has been explained by referring to the exemplary embodiments, the present invention is not limited to the above exemplary embodiments. Various modifications, obvious to those skilled in the art, can be made to the configurations and details of the present invention within the scope of the invention.

This application is based upon and claims the benefit of priority from Japanese Patent Application No. 2014-14547, filed on January 29, 2014, the disclosure of which is incorporated herein in its entirety by reference.

### Reference Signs List

10 DEVICE APPARATUS
20 NETWORK
30 COMMON SERVICE CONTROL APPARATUS
40 DEVICE DISCOVERING UNIT
41 INTER-DEVICE INTERFACE
50 APPLICATION SERVER
60 LOCATIONAL INFORMATION SERVER
110 DEVICE APPARATUS
120 NETWORK
130 COMMON SERVICE CONTROL APPARATUS
401 INQUIRY ACCEPTING UNIT
402 DATABASE REFERRING UNIT
403 DEVICE DATABASE
404 LOCATIONAL INFORMATION ACQUIRING UNIT
405 OTHER SERVICE CONTROL APPARATUS INFORMATION STORAGE UNIT

## Claims

1. A communication system comprising:
a first common service control apparatus that collects data generated in a device apparatus that is connected via a network;
a second common service control apparatus that collects data generated in a device apparatus different from the device apparatus; and
an application server that provides a service using the data collected in the first common service control apparatus, wherein
the application server transmits a message for requesting a collection of the data to the first common service control apparatus, and
the first common service control apparatus determines, upon receiving the message from the application server, whether the first common service control apparatus is connected to the target device apparatus specified in the message via the network, and when the first common service control apparatus is not connected to the target device apparatus, the first common service control apparatus collects the data from the target device apparatus connected to the second common service control apparatus via the network via the second common service control apparatus.

2. The communication system according to Claim 1, wherein the application server sets target device association information used to specify the target device apparatus in the message.

3. The communication system according to Claim 2, wherein the target device association information comprises at least one of locational information in which the target device apparatus is present, the type of data that the target device apparatus collects, time at which the data collected by the target device apparatus has been updated, the type of the device, and the management entity of the device.

4. The communication system according to Claim 3, wherein the locational information is specified using at least one of an address, a latitude, a longitude, and a relative location based on a specific location.

5. The communication system according to Claim 3 or 4, wherein the first and second common service control apparatuses determine whether the target device apparatus is connected via the network using absolute locational information converted in a locational information server installed outside of the common service control apparatus.

6. The communication system according to any one of Claims 1 to 5, wherein the second common service control apparatus notifies, when the second common service control apparatus is connected to the target device apparatus via the network, the application server of a use condition when the target device apparatus is used via the first common service control apparatus.

7. The communication system according to any one of Claims 1 to 6, wherein the first common service control apparatus collects, when the first common service control apparatus is not connected to the target device apparatus, the data from the target device apparatus connected to the second common service control apparatus via the network via the second common service control apparatus without sending a notification indicating that the first common service control apparatus is not connected to the target device apparatus to the application server.

8. A common service control apparatus comprising:
reception means for receiving a message for requesting a collection of data transmitted from an application server;
determination means for determining whether the common service control apparatus is connected to a target device apparatus specified in the message via a network; and
inter-device communication means for collecting, when the common service control apparatus is not connected to the target device apparatus, the data from the target device apparatus that is connected to another common control apparatus via the network.

9. A data collection method comprising:
receiving a message for requesting a collection of data transmitted from an application server;
determining whether a common control apparatus is connected to a target device apparatus specified in the message via a network; and
collecting, when the common control apparatus is not connected to the target device apparatus, the data from the target device apparatus connected to another common control apparatus via the network.

10. A non-transitory computer readable medium storing a program for causing a computer to execute the following processing of:
receiving a message for requesting a collection of data transmitted from an application server;
determining whether a common control apparatus is connected to a target device apparatus specified in the message via a network; and
collecting, when the common control apparatus is not connected to the target device apparatus, the data from the target device apparatus connected to another common control apparatus via the network.
